(19) Europäisches Patentamt / European Patent Office / Office européen des brevets

(11) **EP 4 058 884 B1**

(12) **EUROPEAN PATENT SPECIFICATION**

(45) Date of publication and mention of the grant of the patent:
**19.03.2025  Bulletin 2025/12**

(21) Application number: **20803880.2**

(22) Date of filing: **16.11.2020**

(51) International Patent Classification (IPC):
**G06F 7/58** $^{(2006.01)}$

(52) Cooperative Patent Classification (CPC):
**G06F 7/588**

(86) International application number:
**PCT/EP2020/082242**

(87) International publication number:
**WO 2021/094606 (20.05.2021 Gazette 2021/20)**

(54) **A QUANTUM RANDOM NUMBER GENERATOR**

QUANTENZUFALLSZAHLENGENERATOR

GÉNÉRATEUR DE NOMBRES ALÉATOIRES QUANTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2019  EP 19209203**

(43) Date of publication of application:
**21.09.2022  Bulletin 2022/38**

(73) Proprietor: **Danmarks Tekniske Universitet**
**2800 Kgs. Lyngby (DK)**

(72) Inventors:
 • **GEHRING, Tobias**
   **2800 Kgs. Lyngby (DK)**
 • **ANDERSEN, Ulrik Lund**
   **2800 Kgs. Lyngby (DK)**

(74) Representative: **Høiberg P/S**
   **Adelgade 12**
   **1304 Copenhagen K (DK)**

(56) References cited:
   **US-A1- 2012 221 615**

• **FRANCESCO RAFFAELLI: "Quantum Random Number Generators in Integrated Photonics", 23 January 2019 (2019-01-23), XP055682289, Retrieved from the Internet <URL:https://research-information.bris.ac.uk/files/187187475/Final_Copy_2019_01_23_Raffaelli_F_PhD.pdf> [retrieved on 20200402]**
• **TOBIAS GEHRING ET AL: "8 GBit/s real-time quantum random number generator with non-iid samples", ARXIV.ORG, CORNELL UNIVERSITY LIBRARY, 201 OLIN LIBRARY CORNELL UNIVERSITY ITHACA, NY 14853, 13 December 2018 (2018-12-13), XP081368937**
• **FRANCESCO RAFFAELLI ET AL: "An On-chip Homodyne Detector for Measuring Quantum States and Generating Random Numbers", ARXIV.ORG, CORNELL UNIVERSITY LIBRARY, 201 OLIN LIBRARY CORNELL UNIVERSITY ITHACA, NY 14853, 14 December 2016 (2016-12-14), XP081362160, DOI: 10.1088/2058-9565/AAA38F**
• **ANONYMOUS: "High-quantum-efficiency II-VI photodiode beats silicon in the blue", 1 February 1999 (1999-02-01), XP055682231, Retrieved from the Internet <URL:https://www.laserfocusworld.com/detectors-imaging/article/16548476/highquantumefficiency-iivi-photodiode-beats-silicon-in-the-blue> [retrieved on 20200402]**

EP 4 058 884 B1

## Description

### Field of invention

The invention relates to a quantum random number generator.

### Background of the Invention

Random numbers are ubiquitous in today's digital society. They are for instance used for cryptographic keys and cryptographic applications like blockchain, simulations and gambling. In all cases trustworthy and unique random numbers are required, otherwise cryptographic keys can be compromised and applications like blockchain become insecure, simulations can deliver wrong results and games can be cheated. Random numbers are generated from entropy sources, i.e. sources whose outputs are unpredictable. Today's random number generators are of two types: 1) Pseudo-random number generators are computer algorithms which produce a sequence of numbers from a single input number called seed. However, an algorithm can never produce entropy and only distribute entropy over its outputs. Thus, these numbers appear random but are in fact deterministic since they are computed by a mathematical algorithm. If the seed value is known, the whole sequence is known. 2) Hardware random number generators use physical processes to generate entropy. Most hardware random number generators utilize chaotic classical physical processes as entropy sources which are difficult to simulate. Their security is thus based on the inability of an adversary to compute the evolving physical process. Quantum random number generators are based on measurements of quantum physical phenomena. The randomness is thereby inherent to the measurement process and thus unpredictable by nature.

Existing QRNGs based on vacuum fluctuation measurements use a laser source, a balanced beam splitter (which splits the laser beam equally into two beams), two photo detectors and a subtraction unit as entropy source. The device measures the quadrature amplitude fluctuations of the electro-magnetic ground state, the vacuum state, which enters through the open input port of the beam splitter. While the quantum mechanical measurement yields random results based on quantum mechanical principles, all electronic measurement devices, however, add electronic noise to the measurement results. The noise is of classical nature and thus in principle predictable and therefore has to be removed to get a purely random signal. Relative intensity noise of the laser source is thereby rejected to a large extend by the subtraction operation. However, the drawback is that to achieve good suppression of the technical laser noise, the balancing must be perfect, i.e. the splitting of the beam splitter must be adjusted to exactly 50:50 at all times, which is a challenge when temperature and humidity change and if the QRNG is exposed to movements.

It is important that the random number generator has a simple construction which is stable over time, so that the random number generator does not need to be repeatedly calibrated and/or parts of the random number generator do not need to be adjusted.

Francesco Raffaelli in the thesis "Quantum Random Number Generators in Integrated Photonics", University of Bristol, 2018, presents a quantum random number generator, where the randomness comes from the shot noise of a laser. It is possible that within noise from the laser there is a shot noise component that is inaccessible to an adversary. However, this is difficult to prove as the photo diode performs only an intensity measurement. The laser could emit a (displaced) amplitude squeezed state instead, which is modulated up to the shot noise level. With a characterization of the laser using an intensity measurement only, it is not possible to notice the difference. If the laser emits this state then there is no randomness as there is no shot noise, and this number generator would not generate random numbers not known to the adversary.

The PhD thesis Quantum random number generators in integrated photonics, University of Bristol, 2019 by Raffaelli, Francesco relates to quantum random number generators in integrated photonics.

### Summary of the invention

Considering the prior art described above, it is an object of the present invention to present a QRNG that is stable for a long time and that produces pure random numbers in real-time, and where the QRNG can be positioned in a mobile unit like a mobile phone.

The object can be achieved by means of a quantum random number generator comprising: an entropy source comprising a radiation source, such as a laser source, a single photodiode configured for generating photo current based on received light from the radiation source, where the photodiode has a non-unity quantum efficiency for allowing interference of the light from the radiation source with a vacuum state to obtain entropy from the vacuum state to influence the photo current, a transimpedance amplifier to convert the photo current into voltage, an analog-to-digital converter (ADC) for converting the analog voltage to a digital output, and a processing unit, wherein the quantum random number generator is configured for applying a predefined security proof for establishing a lower bound on the entropy from the vacuum state, and wherein the processing unit is configured for converting the digital output from the analog-to-digital converter to random numbers based on the security proof. The lower bound on the amount of entropy from the vacuum state can be conditioned on the adversary's perfect knowledge of other noise sources.

The receipt of the radiation like e.g. light or laser light from the radiation source and the conversion of the radiation like e.g. light into a photo current can be an amplitude quadrature measurement. The outcome of the measurement comprises entropy from the vacuum state entering through the imperfect photo detection process. An imperfect photo detection process can be modeled (using quantum mechanics) as a beam splitter with transmittivity equal to the quantum efficiency and a perfect photo detection process in transmission of the beam splitter. The beam splitter receives radiation from the radiation source. The vacuum state enters through the unused reflection input port of the beam splitter.

We can consider the abruption in the beam splitter to be negligible, so that the sum of the reflectivity of the beam splitter and the transmittivity of the beam splitter are almost unity. Since the min-entropy may be symmetric at least according to the security proof attached as the example of the present application around reflectivity or transmittivity equal to 50% it does not necessarily matter if the reflectivity or the transmittivity is e.g. 30%, the min-entropy will be the same. With another security proof, the situation may be different.

Light can mean radiation within the visible wavelength range or radiation of any wavelength.

The procedure of the present invention can be to

compute the lower bound on the extractable quantum randomness (min-entropy) by including the possibility of an adversary extracting quantum information via side-channels,
account for correlated consecutive measurement outcomes resulting from the finite bandwidth of the measurement apparatus,
perform a metrology-grade characterization of the measuring single photo detector to quantify their security,
produce random numbers in real-time using a Trevisan randomness extractor or a Toeplitz randomness extractor on a fast field-programmable-gate-array (FPGA).

The quantum random number generator (QRNG) of the present invention can perform a measurement on a quantum state and quantum mechanics tells us that the outcome is inherently random (if the quantum state is not an eigenstate of the measurement operator). Moreover, if the measurement is performed on a pure state, i.e. a state that is not entangled to any other state in the universe, the outcome of the measurement is unique and guaranteed unknown to any adversaries.

The QRNG of the present invention will generate a sequence of numbers that is purely random, i.e. a sequence of numbers, where at least a relative part of $1-10^{-8}$ (which should be understood as $10^{-8}$ less than 1) of the numbers in the sequence of numbers cannot be predetermined, preferably at least a relative part of $1-10^{-9}$, most preferably at least a relative part of $1-10^{-10}$.

The quantum random number generator can comprise not more than one single photodiode. With only one single photodiode no (balanced) beam splitter is necessary. The quantum random number generator having no beam splitter and only one single photodiode will not need to be fine-tuned to achieve balancing. The advantage is that the quantum random number generator with one single photodiode only, will be stable over a longer time as it does not require re-adjustments. If there is a beam splitter so that the radiation from the radiation source is divided in a first and a second trajectories, where the photodiode is positioned to be illuminated by radiation in the first trajectory, and where there is no photodiode in the second trajectory. With a beam splitter, the security proof will also comprise the assumption that the second trajectory cannot be accessed by an adversary, which means that the beam splitter is positioned in a hermetically sealed device or something similar.

The security proof is a set of rules, preferably a set of mathematical rules that describes how to treat the received data from the ADC so that random numbers are extracted that an adversary cannot know. We can as a very simple but illustrative example have a random generator that generates e.g. 20 numbers (1st number, 2nd number,... ,20th number), which an adversary will know are all positive numbers but otherwise does not know anything about them. A first randomness extraction algorithm would e.g. be to subtract the 1st number from the 2nd number, the 3rd number from the 4th number, and so on. In that way, we will only have 10 numbers but the numbers will be both positive and negative, so that the adversary cannot have any information about the random numbers.

Of course a second randomness extraction algorithm could subtract the 1st number from the 3rd number, the 2nd number from the 4th number, and so on. The result would be the same in that some numbers will be positive and some numbers negative, even though the randomness extraction algorithm was a little different.

A third randomness extraction algorithm could multiply the 1st difference of the first security proof with 2nd difference of the first security proof,... , the 9th difference of the first security proof with 10th difference of the first security proof. There will only be five random numbers, some positive and some negative, but some of the five random numbers may have larger absolute numbers (at least if the absolute values of the difference numbers are above one).

In another very simple but illustrative example, a random generator generates, which an adversary will know are all even numbers but otherwise the adversary does not know anything about the generated numbers. A valid randomness extraction algorithm in this situation would e.g. be to divide each generated number by 2, which will generate some even numbers and some uneven ones.

Different quantum random number generators will generate data that, to be able to extract random numbers and only random numbers, will have to be treated differently depending on e.g. what the adversary may know about the measurement outcomes.

Therefore, the security proof or the security proofs that can provide a bound on the min-entropy of the measurement outcomes will have to be decided from case to case. The randomness extraction algorithm providing the pure random numbers has to be designed according to the bound on the min-entropy.

For a certain set of data, there may be many possible security proofs that will establish a bound on the min-entropy generated by the vacuum states to extract purely random numbers, which no adversary can know. A skilled person will know how to formulate a valid security proof and a suitable randomness extraction algorithm to remove any knowledge an adversary may have about the extracted numbers.

In addition, the security proof also has the assumption that the quantum efficiency of the photo diode or the ratio of the beam splitter is sufficiently low to obtain a sufficiently low bound from above for the noise of the radiation source in the phase quadrature.

Due to the non-perfect quantum efficiency of the photodiode (the quantum efficiency is less than 100%), not all photons are detected by the photodiode, and vacuum fluctuations, which are totally random by nature, enter the system. The photo current from the photodiode can be influenced by the physical characteristic of the photodiode along with the vacuum fluctuations. Since the radiation from the radiation source can be measured by the photodiode without any subtraction or filtering, the signal leaving the photodiode comprises the vacuum fluctuations, but also technical noise from the radiation source, the photodiode and the electronic circuit, which are classical, deterministic noise processes, which can potentially be known to an adversary.

The photo current from the photo diode can be fed into an amplifier followed by the ADC transforming the fluctuations of the current into fluctuations of a digital signal. The ADC enables a computer to extract the analog signal from the photodiode. Next, the digital signal can be passing a randomness extractor based on a universal hash function in which the information due to the classical noise from the electronics, the radiation and the detector is removed and the entropy from the vacuum state is extracted. To perform this step the quantum random number generator has to be calibrated in order to estimate entropy contributions from all classical noise sources and the vacuum noise. The ADC can be connected to a fast field-programmable-gate-array (FPGA) for data acquisition and also for post-processing.

The quantum random number generator can comprise an amplifier that can be positioned before the ADC for amplifying the signal from the single photodiode. The signal from the photodiode can be amplified to match the input range of the analog-to-digital converter. That way the whole range of the ADC is used.

The signal from the photodiode is preferably also highpass filtered to remove the large offset voltage due to the direct current through the photodiode induced by detecting the radiation from the radiation source. With an offset the whole range of the ADC cannot be utilized.

The processing unit is configured to convert the digital output from the ADC to random numbers based on the security proof, such that the entropy of the random numbers is purely based on the vacuum state. It is a correctly formulated security proof and a correspondingly designed randomness extraction algorithm that removes any knowledge that an adversary can have about the measurement outcomes and thus the extracted numbers.

The security proof - see part II "Security Analysis" of the article titled "8 GBit/s real-time quantum random number generator with non-iid samples", by Gehring et al. from now on called the Article - comprises assumptions and parameters,

where the assumption also valid for the quantum random number generator of the present invention is:

- all noise sources (quantum and classical) have a Gaussian distribution and are stationary (verification see Fig. 4c in the Article). Stationary can mean that the quantum random number generator follows a device dependent scheme.

where the parameters are:

- variance ($\sigma^2$) of the measurement signal in the amplitude quadrature
- conditional variance ($\sigma_X^2$) of the measurement signal in the amplitude quadrature
- conditional variance ($\sigma_u^2$) of excess noise in the amplitude quadrature

The three parameters are presented in part II and III of the Article and confidence intervals are derived in Appendix C.

The Article can be found on https://www.researchgate.net/publication/329641481_8_GBits_real-time_quantum_random_number_generator_with_non-iid_samples.

Another assumption that can be valid for the quantum random number generator of the present invention is

- the amount of technical phase quadrature noise can be bounded from above (e.g. by measuring the output power of the radiation source, an upper limit of the noise can be determined).

Another security proof is presented as an example at the end of this application. This is a better security proof than the one presented in the Article in that it does not make any assumption about the radiation source and thereby has a better security guarantee as any assumption in a security proof needs to be verified. Both security proofs will only provide true random numbers, which an adversary cannot know or determine.

Using a high speed photo detector and a high speed ADC it is thus possible to extract a sequence of random numbers at a very high rate.

When optical loss in the photo diode occurs, the vacuum state and/or the entropy of the vacuum state will or can enter and influence the photo current according to the law of quantum mechanics.

Using the security proof we receive a randomness that is solely from vacuum states. That is beneficial since a radiation source, like a laser, cannot not be trusted, since the radiation source can emit any state, not only vacuum states. The security proof, that estimates the available randomness, is different from prior art and does not rely on certain assumptions on the laser. This has practical advantages as all assumptions made have to be validated and are required to stay valid over the lifetime of the quantum random number generator.

In an embodiment, the lower bound on the entropy can be determined by, preferably only determined by, any one or all of

- the quantum efficiency of the photodiode,
- power of the radiation source, and
- resolution of the analog-to-digital converter.

Alternatively, "determined by" can be replaced by "dependent on" in this embodiment and in other embodiments, where "determined by" are used.

The quantum efficiency of the photodiode is trusted. Trusted means that the physical properties can be characterized beforehand (e.g. the quantum efficiency) and do not change during random number generation. The radiation source, however, is not trusted. Unlike the radiation source, randomness being due to the non-unity quantum efficiency of the photo diode can be guaranteed even against attackers which have some control over the radiation source.

The higher the power of the radiation source, the more photons are entering the photodiode. The more photons entering the photodiode, the more random numbers can be extracted.

A coarse resolution of the analog-to-digital converter (ADC) will lower the number of random numbers that can be extracted. With a better resolution of the ADC the number of random numbers that can be extracted will not be so much lowered. Preferably, the resolution is at least 1024 different levels, more preferably at least 65000 different levels, even more preferably at least 262000 different levels, further more preferably at least 1040000 different levels, even further more preferably at least 4100000 different levels, and most preferably at least 16700000 different levels.

In an embodiment, the vacuum states used as randomness source can interfere with the radiation from the radiation source at the photodiode due to the non-unity quantum efficiency of the photodiode.

Since we establish the min-entropy steming from the vacuum states interfering with the radiation from the radiation source as described above and we do not establish it from the radiation of the radiation source all knowledge of an adversary about the measurement outcomes can be eliminated without trusting the radiation source.

In an embodiment, the only vacuum states used as randomness source can interfere with the radiation from the radiation source at the photodiode due to the non-unity quantum efficiency of the photodiode.

In an embodiment of the quantum random number generator, the radiation source can be a Fabry-Perot diode laser, a distributed feedback laser, a distributed Bragg reflector laser or a vertical cavity surface-emitting laser, coherent microwave source, or an incoherent radiation source, such as an LED, a fluorescent lamp, an incandescent lamp like e.g. a halogen lamp, an arc lamp, a gas-discharge lamp, or a microwave source. Such lasers, LEDs, and possibly also microwave sources can be made very tiny so that the whole QRNG can be made so small that the QRNG can be comprised in a computer or a smart phone.

In an embodiment of the quantum random number generator, the single photodiode can be an Indium Gallium Arsenide, a Silicon or a Germanium diode. Such a photodiode can be a high-speed photodiode.

In an embodiment of the quantum random number generator, the single photodiode can have a quantum efficiency at the wavelength or band of wavelengths of the received radiation from the radiation source, where the quantum efficiency is less than 90%, preferably less than 85%, more preferably less than 80%, even more preferably less than 75%, further more preferably less than 70%, and most preferably less than 60%.

The quantum efficiency must not be close to 100%, since a lower efficiency is advantageous to increase the entropy contribution from the vacuum state. For an electronic noise free detector, the lower the quantum efficiency, the higher the entropy from the vacuum states, and the larger the speed with which random numbers can be generated. For a noisy detector, an optimum value for the quantum efficiency can be found.

In an embodiment, the single photodiode can have a quantum efficiency at the wavelength or band of wavelengths of the received light from the laser source, where the quantum efficiency is more than 10%, preferably more than 15%, more preferably more than 20%, even more preferably more than 25%, further more preferably more than 30%, and most preferably more than 40%.

Even though, the min entropy according to some security proof has a maximum and the number of random numbers that can be extracted per time unit has a maximum when the quantum efficiency is 50%, the number of extractable random numbers are quite large when the quantum efficiency is between 10% and 90%.

In an embodiment of the quantum random number generator, the processing unit can be configured to convert the digital output from the ADC to random numbers using a randomness extraction algorithm. All electronic measurement devices add electronic noise to the measurement results. Since the random numbers shall be generated from the entropy of the vacuum state only and not influenced by classical noise processes which are potentially known to an adversary, the entropy of the quantum process must be extracted. A suitable randomness extractor can be the Trevisan extractor, but there are other suitable randomness extractors.

In an embodiment of the quantum random number generator, the randomness extraction is performed using so-called hash functions which are mathematical one-way functions which have been shown to remove any knowledge of potential adversaries. A mathematical security proof thereby yields the amount of entropy that can be extracted safely from the noisy measurement. A suitable hash function is e.g. the Toeplitz extractor that can be used as the randomness extractor.

In an embodiment of the quantum random number generator, the laser source and/or the photodiode, can be integrated on a photonic integrated circuit (PIC) preferably based on silicon, or even more preferably based on Indium Phosphide, since Indium Phosphide is ideal for including a laser. A PIC can comprise a laser or an incoherent radiation source like e.g. a LED, a photo diode and an optical waveguide for guiding radiation from the laser or the radiation source to the photo diode. With a PIC, no sensitive optical system using lenses or fibers for guiding the radiation from the laser or the radiation source to the photodiode is necessary. With a PIC, the QRNG will be long time stable, and the radiation from the laser or the radiation source to the photodiode will be correctly guided even though the QRNG is accidentally dropped on the floor.

In an embodiment of the quantum random number generator, the quantum random number generator can be integrated as an integrated circuit (IC). The IC contains the photonic integrated circuit and an application specific integrated circuit (ASIC) containing all electronics, e.g. for randomness extraction. If integrated on an IC, a computer, a smart phone or any electronic item can have its own quantum random generator.

In an embodiment of the quantum random number generator, the IC can comprise the PIC.

In an embodiment of the quantum random number generator, the quantum random number generator can comprise a waveguide, preferably a silicon waveguide, or even more preferably an Indium Phosphide waveguide, since an Indium Phosphide waveguide is ideal for including a laser, for guiding the radiation or light from the laser source to the photodiode. The waveguide like the silicon waveguide or the Indium Phosphide waveguide can alternatively include an LED instead of the laser for guiding the radiation or light from the LED to the photodiode. With a waveguide, no sensitive optical system using lenses or fibers for guiding the radiation from the laser to the photodiode is necessary. With a waveguide, the QRNG will be long time stable, and the radiation from the laser to the photodiode will be correctly guided even though the QRNG is accidentally dropped on the floor.

In an embodiment of the quantum random number generator, the quantum random number generator can comprise a beam splitter with a non-unity reflectivity positioned between the laser source and the single photodiode. A beam splitter normally has two input ports and two output ports, where radiation entering one of the input ports will be split between the two output ports and where radiation entering the other input port will also be split between the two output ports. With the radiation from the laser source entering one input port of the beam splitter, the entropy can be extracted from the vacuum state entering the other input port of the beam splitter. The splitting ratio of a physical beam splitter may be simpler to design to a specific value. In a photonic integrated circuit it may also be simpler to characterize than the quantum efficiency of the photo diode. The characterization has to bound the splitting ratio of the beam splitting such that in contrast to the traditional balanced detector with two photodiodes, small variations due to environmental influences have no effect on the security of the generated random numbers.

In an embodiment, the quantum random number generator can be modified in that the quantum efficiency of the photodiode is unity.

If the quantum random number generator comprises the beam splitter with a non-unity reflectivity positioned between the radiation source and the single photodiode, the quantum efficiency of the photodiode can be unity or non-unity. If the vacuum states cannot enter via the photodiode the vacuum states will enter via the beam splitter.

In an embodiment, the lower bound on the entropy can be determined by, preferably only determined by, any one or all of reflectivity of the beam splitter, power of the radiation source, and resolution of the analog-to-digital converter or reflectivity of the beam splitter, the quantum efficiency of the photodiode, power of the radiation source, and resolution of the analog-to-digital converter.

The advantages are the same as mentioned above when the lower bound on the entropy is determined by, preferably only determined by, any one or all of the quantum efficiency of the photodiode, power of the radiation source, and resolution of the analog-to-digital converter. The further advantage is as mentioned above that the splitting ratio of a physical beam splitter may be simpler to design to a specific value than the quantum efficiency of the photodiode.

In an embodiment, the vacuum states as randomness source can interfere with the radiation from the radiation source at the beam splitter due to the non-unity reflectivity of the beam splitter.

Since we establish the min-entropy stemming from the vacuum states interfering with the radiation from the radiation source as described above and we do not establish the min-entropy from the radiation of the radiation source all knowledge of an adversary about the measurement outcomes can be eliminated without trusting the radiation source.

In an embodiment, the vacuum states as randomness source interfere with the radiation from the radiation source at the single photodiode due to the non-unity quantum efficiency of the photodiode and at the beam splitter due to the non-unity reflectivity of the beam splitter.

## Description of the drawings

The invention will in the following be described in greater detail with reference to the accompanying drawings:

Fig. 1a    a schematic view of the set-up for generating random numbers
Fig. 1b    another schematic view of the set-up with a beam splitter for generating random numbers
Fig. 2     a flow-chart for the random number generation and extraction
Fig. 3     a schematic view of the power spectral density of the signal
Fig. 4a    a graph plotting $H_{min}$ versus R with constant $\eta$
Fig. 4b    a graph plotting $H_{min}$ versus $\eta$ for different R

## Detailed description of the invention

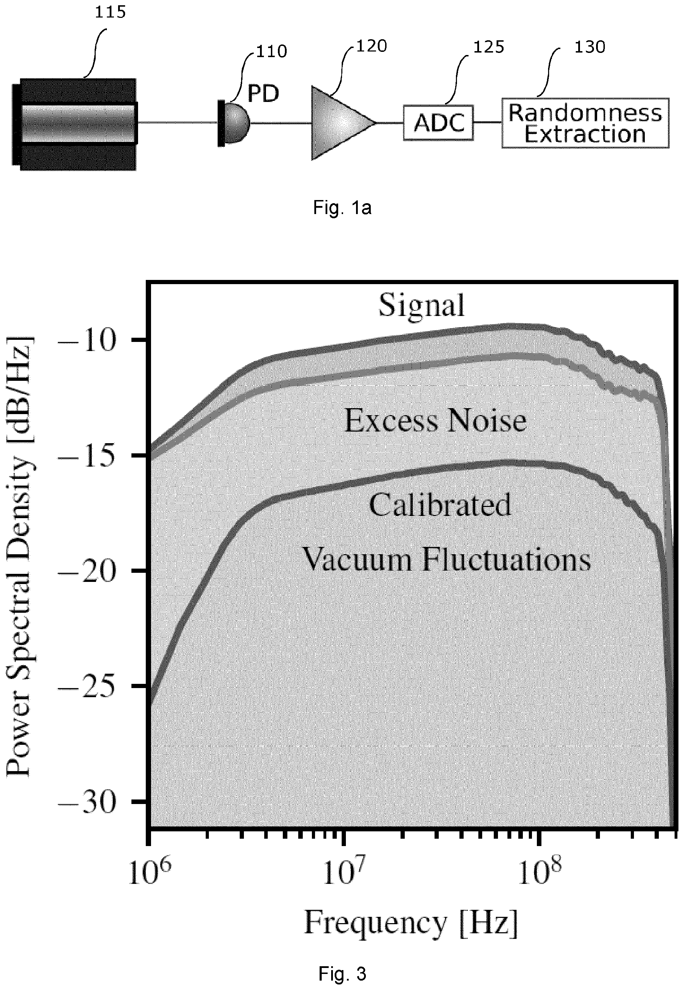

Fig. 1a shows a schematic view of the set-up. The set-up comprises a photodiode 110 receiving radiation like light or laser light from a radiation source like e.g. a laser or an incoherent radiation source 115. A signal generated by the photodiode is amplified by an amplifier 120 and is sent to an analog-to-digital converter (ADC) 125 so that the analog signal from the amplifier is converted to a digital signal. The amplifier amplifies the signal so that the analog signal optimally covers the range of the ADC so that the entropy from the vacuum state in the digital signal from the ADC has the highest possible amount.

Since the signal from the ADC not only comprises the desired vacuum fluctuations but also deterministic noise, which cannot be used in this context, a randomness extractor 130 has to turn the digital signal from the ADC 125 into a signal whose entropy is solely determined by the vacuum fluctuations.

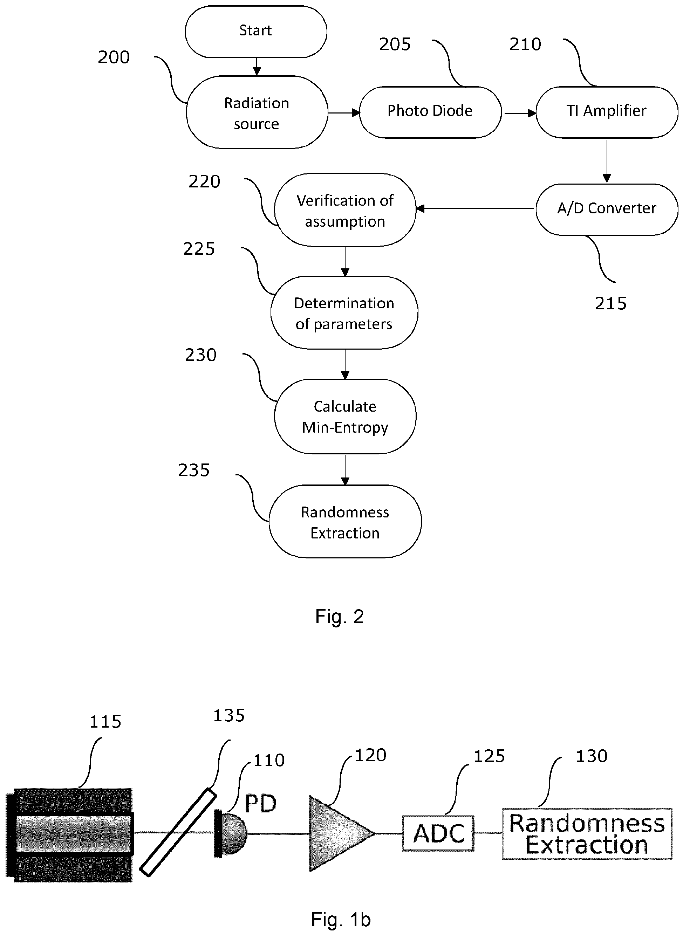

Fig. 1b has in addition to the set-up shown in Fig. 1a a beam splitter 135 positioned between the radiation source 115 and the photodiode 110. With the beam splitter 135, the vacuum states can enter the system via the beam splitter 135 instead of or in addition to the photodiode 110.

In Fig. 1b radiation source 115 emits quantum states of radiation, which impinge on a beam splitter 135. No radiation - corresponding to the quantum mechanical vacuum state - enters the other input port of the beam splitter. At one output of the beam splitter, the radiation intensity is then measured with a photodiode 110, while the other output is ignored. In the security analysis the beam splitter (and in particular the splitting ratio) is trusted, as well as the detector. Trusted thereby means that the physical properties can be characterized beforehand and do not change during random number generation. The radiation source, however, is not trusted, and randomness can be guaranteed even against attackers which have some control over the radiation source. So an untrusted radiation source, the radiation source 115, emits quantum states which are mixed with trusted vacuum on the beam splitter 135, for which an upper bound on the transmittivity is known. The intensity of transmitted radiation is measured by the photodetector 110, providing the raw data for randomness extraction.

Random numbers are generated by post-processing the detection outcomes from the ADC 125, based on a lower bound on the entropy present in the raw data. Such a bound can be obtained by observing the mean intensity over several experimental rounds. The idea is as follows. From the perspective of an attacker, when the transmittivity of the beam splitter is not perfect, the only way to ensure a definitive, perfectly predictable outcome of the intensity measurement in a given round is to input no radiation at all. Any non-zero amount of input radiation will lead to randomness in the number of photons after the beam splitter - and hence in the intensity measurement - because each input photon will be probabilistically transmitted or reflected. However, if in every round no radiation is input, the average observed intensity will be zero. Hence, if one conditions on observing a non-zero average intensity over multiple rounds, such an attack is ruled out. A non-zero average intensity implies a non-zero amount of input radiation and hence a non-zero amount of randomness. The amount of randomness can be quantified based on the observations.

It is noted that mixing with the vacuum is crucial for the security of this scheme. If the transmittivity of the beam splitter is unity, by controlling the radiation source an attacker can perfectly predict the outcomes of the measurements and hence no randomness can be extracted.

Fig. 1a illustrates a possible implementation of the QRNG in practice. As we have seen, in this setup, radiation from the radiation source 115 irradiates the single photodetector or photodiode 110 with limited quantum efficiency without a beam splitter in between and the output is recorded. The radiation source is untrusted while the photodiode - and in particular an upper bound on the efficiency of the photodiode - is trusted. A limited-efficiency photodiode can be understood as a perfectly efficient photo detector preceded by a beam splitter with transmittivity equal to the efficiency of the photo diode. Hence, this setup maps exactly to the conceptual scheme above, provided that an upper bound on the detection efficiency is known.

In contrast to other schemes based on amplitude quadrature measurements of vacuum fluctuations in the scheme, the radiation source does not have to be trusted to emit certain states. The randomness rather solely stems from the vacuum state entering through the beam splitter, respectively through the non-unity quantum efficiency of the photodiode. This has not only practical but also security advantages as it is experimentally impossible to prove with a single quadrature measurement (as obtained by a single photodiode) which quantum states are emitted by a source.

The flow-chart in Fig. 2 shows the procedure to generate entropy solely from the vacuum states or vacuum fluctuations so that a list of random numbers can be generated.

A radiation source 200, which can be a laser or an incoherent radiation source emits radiation or light that reaches a photodiode 205 with a quantum efficiency less than 100%.

The signal from the photodiode is amplified by an amplifier 210 to cover the whole range of an input of an analog-to-digital converter (ADC) 215, where the signal is made discrete, so that the entropy from the vacuum state of the discrete digital signal from the ADC is as high as possible.

The Power Spectral Density (PSD) of the signal that comes out of the ADC comprises contributions from the optical signal, from excess noise and from vacuum fluctuations as shown in Fig. 3.

The amount of quantum randomness that can be extracted from the measurement of vacuum fluctuations has an upper limit as given in part I "Setting the Stage" of the Article.

To be able to extract that part of the signal that is purely random, which is the vacuum fluctuations, the signal has to be analysed, using the steps Verification of assumption 220, Determination of parameters 225, Calculate Min-Entropy 230 and finally Randomness Extraction 235.

In the step Verification of assumption 220, it has to be shown that the extracted part fulfils some assumptions.

These assumptions are that the noise has a Gaussian distribution, that the amount of phase noise has an upper limit, which can be determined by the measurement of power of the radiation source, that, if there is a beam splitter in the set-up in Fig. 1, so that the radiation like e.g. light or laser light is split in a first and a second trajectories, where the first trajectory has the photo diode, the second trajectory cannot be accessed by an adversary, which means that the beam splitter is positioned in a hermetically sealed device or something similar, and that the beam splitter ratio / quantum efficiency of the photodiode has an upper bound for the noise in the phase quadrature.

The analysis is further disclosed in part II "Security Analysis" of the Article. In the Article, the set-up comprises two photodiodes one for each of the first and a second trajectories after the beam splitter, where the beam splitter is arranged such that 50% of the signal reaches each of the photodiodes so that the noise can be removed by subtraction. The skilled person when reading the part II will understand what parts relate specifically to the arrangement of the two photodiodes, which is not relevant according to this invention.

From the PSDs and based on the assumptions, the parameters: signal variance $\sigma^2$, conditional signal variance $\sigma_\chi^2$, and conditional excess noise variance $\sigma_\upsilon^2$ can be determined 225, and subsequently the min-entropy can be obtained 230, see parts II and III in the Article for details.

Part I in the Article discloses that the upper limit of the vacuum fluctuations is dependent on the min-entropy of a single measurement outcome drawn from a random variable conditioned on the quantum side-information held by an adversary. Since we have the min-entropy, we can calculate the lower limit on the min-entropy of the vacuum fluctuations.

After that, random numbers can be extracted 235 as described in part IV in the Article. The extraction is done by using a strong extractor based on a Toeplitz matrix hashing algorithm.

EXAMPLE

Sketch of security proof

Here, we provide a sketch of how to demonstrate security and derive an entropy bound for the scheme above for the set-ups shown in Fig. 1a and 1b. First, is the case of inefficient, but otherwise ideal, photodetectors disclosed. Other realistic imperfections are discussed below.

Inefficient detectors

A proof for inefficient, but otherwise ideal, detectors proceeds in three steps.

- First, one shows that entangling input states across rounds does not aid an attacker in predicting the measurement outputs.
- Second, one shows that the optimal strategy for an attacker is to input states with a definite photon number (Fock states) in every round.
- Finally, one gives an expression for the min-entropy of the raw data relative to the attacker, conditioned on a given observed mean intensity.

Entanglement does not help

We consider the measurement as an ideal photon counter preceeded by a beam splitter with transmittivity $\eta$ (c.f. Fig. 1b). The signal is incident in one port of the beam splitter while in the second port a vacuum state is input. The probability for observing an output n given an input signal in state $\rho$ is

$$p(n) = \mathrm{Tr}[U(\eta)(\rho \otimes |0\rangle_B \langle 0|)U^\dagger(\eta)(|n\rangle_A \langle n| \otimes \mathbb{1}_B)], \qquad (1)$$

where $U(\eta)$ is the unitary transformation corresponding to the beam splitter, $|k\rangle$ with k = 0, 1,... are the Fock states, and A and B label the signal and vacuum ports of the beam splitter. We can rewrite this as

$$p(n) = \mathrm{Tr}_A[\rho \,_B\langle 0|U^\dagger(\eta)(|n\rangle\langle n| \otimes \mathbb{1})U(\eta)|0\rangle_B]. \qquad (2)$$

From this, we see that the measurement, including the beam splitter, is described by a positive operator-valued measure (POVM) acting on the signal mode, with POVM elements

$$\Pi_n = \,_B\langle 0|U^\dagger(\eta)(|n\rangle\langle n|\otimes \mathbb{1})U(\eta)|0\rangle_B = \sum_{k=0}^{\infty} \binom{n+k}{k} \eta^n (1-\eta)^k |n+k\rangle\langle n+k|. \qquad (3)$$

This measurement is diagonal in the Fock basis, i.e. all the POVM elements are diagonal in this basis. We can write

$$\Pi_n = \sum_m q_m^n |m\rangle\langle m|.$$

Consider now a sequence of N such measurements on a joint, possibly entangled, state

$$|\Psi\rangle_{A_1,...,A_N,E},$$

between N modes and potentially some additional system E held by an eavesdropper, Eve. The probability for observing a particular sequence of outcomes $n_1,..., n_N$ is

$$P(n_1,\ldots,n_N) = \mathrm{Tr}[\rho_\Psi(\Pi_{n_1} \otimes \cdots \otimes \Pi_{n_N} \otimes \mathbb{1}_E)] \qquad (4)$$

$$= \sum_{m_1,\ldots,m_N} q^{n_1}_{m_1} \cdots q^{n_N}_{m_N} \langle m_1,\ldots,m_N | \mathrm{Tr}_E[\rho_\Psi] | m_1,\ldots,m_N \rangle. \qquad (5)$$

From this expression, we see that only diagonal (in the Fock basis) terms in $\rho_\Psi$ contribute. It follows that entanglement does not help an adversary predict the measurement outcomes.

The optimal input is a Fock state

Consider that the average intensity is estimated every R rounds of the experiment, and denote the observed average photon number by $\mu$. The adversary thus needs to pick the distribution of input states such that this observation is reproduced, while maximising her probability for predicting the measurement outcomes over the R rounds. Since entanglement does not help, and off-diagonal terms in the Fock basis do not alter the probabilities, in a given round, the most general state an adversary can effectively prepare is of the form

$$\sum_k q(k)|k\rangle\langle k|, \qquad (6)$$

which would, on average, give an observed photon number $\Sigma_k\, q(k)k\eta$. The probability for Eve to guess the output is just equal to the probability of the most likely measurement outcome, which is

$$\max_n \sum_k q(k)\binom{k}{n}\eta^n(1-\eta)^{k-n}. \qquad (7)$$

We note that the averaging over the distribution q(k) will tend to flatten the distribution over outcomes (since mixing multiple distributions will produce a less peaked distribution). Hence, the optimal choice for an adversary to maximise her guessing probability will be to make q(k) equal to a delta function for some k. That is, to input a Fock state. Note that the adversary is free to (classically) correlate her inputs across rounds, so she can choose to input different Fock states in different rounds.

Computing the entropy

In fact, to maximise her information (that is, to minimise the entropy from her perspective) in the measurement sequence, her best option is to input a large Fock state in a single round, and no light at all in the remaining R - 1 rounds. When the input is vacuum, the measurement outcome is always zero and hence perfectly predictable. So only the bright round will have non-zero entropy. The entropy grows with the size of the Fock states (since more outcomes are possible, and the variance is larger, when there are more input photons). So the adversary should use the smallest state possible which will still reproduce (at least) the required average $\mu$. That is, she should input $\lceil R\mu/\eta \rceil$ photons. In that case, the total min-entropy over the R rounds will be (this is roughly the number of extractable random bits)

$$-\frac{1}{R}\log_2\left(\frac{\lceil R\mu/\eta \rceil}{\lfloor(\lceil R\mu/\eta \rceil + 1)\eta\rfloor}\right)\eta^{\lfloor(\lceil R\mu/\eta \rceil+1)\eta\rfloor}(1-\eta)^{\lceil R\mu/\eta \rceil-\lfloor(\lceil R\mu/\eta \rceil+1)\eta\rfloor} \qquad (8)$$

Note that, as discussed in the concept section above, limited transmittivity of the beam splitter is crucial. For $\eta = 1$, the entropy becomes zero and no randomness can be extracted. This is in contrast to other QRNG schemes based on quadrature measurements of e.g. shot noise limited lasers.

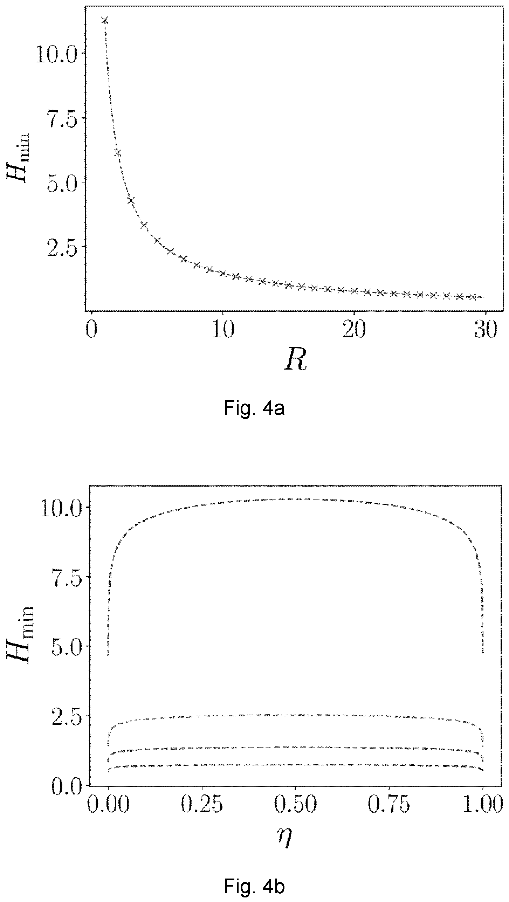

An illustration of the expression of total min-entropy, $H_{min}$, is shown in Figs. 4a and 4b for an intensity of $10^6$ photons per round, which corresponds to 1 mW power at a wavelength of 850 nm, assuming a round takes 1 ns. In Fig. 4a, $\eta$ = 0.5 and $H_{min}$ is plotted against R as defined above. As expected, the extractable randomness decreases with the length of the averaging interval as shown in Fig. 4a.

Fig. 4b shows $H_{min}$ plotted against the beam splitter transmissivity, $\eta$. If we had used the non-unity quantum efficiency of a photodiode, the graph would look the same. Fixing the average input intensity the min-entropy has a maximum at 50% reflectivity as shown in Fig. 4b. Fig. 4b shows four graphs, where the graphs seen from above has R = 1, 5, 10, and 20, respectively. Note that the randomness increases with the average observed intensity.

Final comments

In a full security proof, the coarse-graining entailed by the analog-to-digital conversion of the detector output may advantageously also be accounted for, as well as the noise from the analog-to-digital converter, other electronic noise sources and the effect of detector saturation on the randomness. The latter implies that in addition to dark rounds, the detector output is also predictable for very bright rounds. This imposes further constraints on the combinations of mean intensity and length of averaging intervals, which will lead to good randomness generation.

**Claims**

1.  A quantum random number generator comprising:

    - an entropy source comprising a radiation source, such as a laser source,

    - a single photodiode configured for generating photo current based on received light from the radiation source, where the photodiode has a non-unity quantum efficiency for allowing interference of the radiation from the radiation source with a vacuum state to obtain entropy from the vacuum state, or
    - a single photodiode configured for generating photo current based on received light from the radiation source, and a beam splitter with a non-unity reflectivity or a non-unity transmittivity positioned between the radiation source and the single photodiode, wherein the quantum random number generator is configured such that a vacuum state interfere with the radiation from the radiation source at the beam splitter,

    - a transimpedance amplifier to convert the photo current into voltage,
    - an analog-to-digital converter for converting the analog voltage to a digital output, and
    - a processing unit,

    wherein the quantum random number generator is configured for establishing a lower bound on the entropy from the vacuum state by at least obtaining parameters from the signal that comes out of the analog-to-digital converter and determining the lower bound on the entropy from the vacuum state by applying a security proof to said parameters, and wherein the processing unit is configured for converting the digital output from the analog-to-digital converter to random numbers based on the established lower bound on the entropy from the vacuum state.

2.  The quantum random number generator according to claim 1, wherein the lower bound on the entropy is determined by, preferably only determined by, any one or all of

    - the quantum efficiency of the photodiode,
    - power of the radiation source, and
    - resolution of the analog-to-digital converter.

3.  The quantum random number generator according to any of the preceding claims, wherein the vacuum states used as randomness source interfere with the radiation from the radiation source at the photodiode due to the non-unity quantum efficiency of the photodiode.

4.  The quantum random number generator according to any of the preceding claims, wherein the only vacuum states used as randomness source interfere with the radiation from the radiation source at the photodiode due to the non-unity quantum efficiency of the photodiode.

5.  The quantum random number generator according to any of the preceding claims, wherein the radiation source is a Fabry-Perot diode laser, a distributed feedback laser, a distributed Bragg reflector laser, a vertical cavity surface-emitting laser, coherent microwave source, or an incoherent radiation source, such as an LED lamp, a fluorescent lamp, an incandescent lamp like e.g. a halogen lamp, an arc lamp, a gas-discharge lamp, or a microwave source.

6.  The quantum random number generator according to any of the preceding claims, wherein the single photodiode is an Indium Gallium Arsenide diode, a Silicon diode or a Germanium diode.

7. The quantum random number generator according to any of the preceding claims, wherein the single photodiode has a quantum efficiency at the wavelength or band of wavelengths of the received light from the laser source, where the quantum efficiency is less than 90%, preferably less than 85%, more preferably less than 80%, even more preferably less than 75%, further more preferably less than 70%, and most preferably less than 60%.

8. The quantum random number generator according to any of the preceding claims, wherein the single photodiode has a quantum efficiency at the wavelength or band of wavelengths of the received light from the laser source, where the quantum efficiency is more than 10%, preferably more than 15%, more preferably more than 20%, even more preferably more than 25%, further more preferably more than 30%, and most preferably more than 40%.

9. The quantum random number generator according to any of the preceding claims, wherein the processing unit is configured to convert the digital output from the analog-to-digital converter to random numbers using a randomness extraction algorithm, preferably wherein the randomness extraction algorithm is based on hash functions.

10. The quantum random number generator according to any of the preceding claims, wherein the radiation source and/or the photodiode, is/are integrated on a photonic integrated circuit (PIC), preferably based on silicon, or even more preferably based on Indium Phosphide.

11. The quantum random number generator according to any of the preceding claims, wherein the quantum random number generator is integrated on an integrated circuit (IC), preferably wherein the IC comprises the PIC.

12. The quantum random number generator according to any of the preceding claims, wherein the quantum random number generator comprises a waveguide for guiding the light from the radiation source to the photodiode, preferably the waveguide is a silicon waveguide or an Indium Phosphide waveguide.

13. The quantum random number generator according to any of the preceding claims, wherein the quantum random number generator is modified in that the quantum efficiency of the photodiode is unity.

14. The quantum random number generator according to any of the preceding claims, wherein the lower bound on the entropy is determined by

- reflectivity of the beam splitter,
- power of the radiation source, and
- resolution of the analog-to-digital converter
or
- reflectivity of the beam splitter,
- the quantum efficiency of the photodiode,
- power of the radiation source, and
- resolution of the analog-to-digital converter.

15. The quantum random number generator according to any of the claims, wherein the vacuum states as randomness source interfere with the radiation from the radiation source at the single photodiode due to the non-unity quantum efficiency of the photodiode and at the beam splitter due to the non-unity reflectivity of the beam splitter.

**Patentansprüche**

1. Quantenzufallszahlengenerator, Folgendes umfassend:

• eine Entropiequelle, die eine Strahlungsquelle, wie etwa eine Laserquelle, umfasst,

- eine einzelne Fotodiode, die dazu konfiguriert ist, Fotostrom basierend auf von der Strahlungsquelle empfangenem Licht zu erzeugen, wobei die Fotodiode eine von eins verschiedene Quanteneffizienz aufweist, um eine Interferenz der Strahlung von der Strahlungsquelle mit einem Vakuumzustand zu ermöglichen, um Entropie aus dem Vakuumzustand zu erlangen, oder
- eine einzelne Fotodiode, die dazu konfiguriert ist, Fotostrom basierend auf von der Strahlungsquelle empfangenem Licht zu erzeugen, und einen Strahlteiler mit einer von eins verschiedenen Reflektivität oder einer von eins verschiedenen Transmittivität, der zwischen der Strahlungsquelle und der einzelnen Fotodiode positioniert ist, wobei der Quantenzufallszahlengenerator derart konfiguriert ist, dass ein Vakuumzustand die Strahlung von der Strahlungsquelle an dem Strahlteiler stört,

- einen Transimpedanzverstärker zum Umwandeln des Fotostroms in Spannung,
- einen Analog-Digital-Wandler zum Umwandeln der analogen Spannung in eine digitale Ausgabe, und
- eine Verarbeitungseinheit,

wobei der Quantenzufallszahlengenerator dazu konfiguriert ist, eine Untergrenze der Entropie aus dem Vakuumzustand zu ermitteln, indem mindestens Parameter aus dem Signal, das aus dem Analog-Digital-Wandler kommt, erlangt werden und die Untergrenze der Entropie aus dem Vakuumzustand bestimmt wird, indem ein Sicherheitsnachweis auf die Parameter angewendet wird, und wobei die Verarbeitungseinheit dazu konfiguriert ist, die digitale Ausgabe des Analog-Digital-Wandlers basierend auf der ermittelten Untergrenze der Entropie aus dem Vakuumzustand in Zufallszahlen umzuwandeln.

2. Quantenzufallszahlengenerator nach Anspruch 1, wobei die Untergrenze der Entropie durch eine oder alle der folgenden Größen, bevorzugt nur durch diese, bestimmt wird

   - Quanteneffizienz der Fotodiode,
   - Leistung der Strahlungsquelle, und
   - Auflösung des Analog-Digital-Wandlers.

3. Quantenzufallszahlengenerator nach einem der vorstehenden Ansprüche, wobei die als Zufallsquelle verwendeten Vakuumzustände die Strahlung von der Strahlungsquelle an der Fotodiode aufgrund der von eins verschiedenen Quanteneffizienz der Fotodiode stören.

4. Quantenzufallszahlengenerator nach einem der vorstehenden Ansprüche, wobei die einzigen als Zufallsquelle verwendeten Vakuumzustände die Strahlung von der Strahlungsquelle an der Fotodiode aufgrund der von eins verschiedenen Quanteneffizienz der Fotodiode stören.

5. Quantenzufallszahlengenerator nach einem der vorstehenden Ansprüche, wobei die Strahlungsquelle ein Fabry-Perot-Diodenlaser, ein Laser mit verteilter Rückkopplung, ein Laser mit verteiltem Bragg-Reflektor, ein Vertical Cavity Surface-Emitting Laser (VCSEL), eine kohärente Mikrowellenquelle oder eine inkohärente Strahlungsquelle, wie etwa eine LED-Lampe, eine Fluoreszenzlampe, eine Glühlampe wie z. B. eine Halogenlampe, eine Bogenlampe, eine Gasentladungslampe oder eine Mikrowellenquelle ist.

6. Quantenzufallszahlengenerator nach einem der vorstehenden Ansprüche, wobei die einzelne Fotodiode eine Indium-GalliumArsenid-Diode, eine Silizium-Diode oder eine Germanium-Diode ist.

7. Quantenzufallszahlengenerator nach einem der vorstehenden Ansprüche, wobei die einzelne Fotodiode eine Quanteneffizienz bei der Wellenlänge oder dem Wellenlängenband des von der Laserquelle empfangenen Lichts aufweist, wobei die Quanteneffizienz weniger als 90 %, bevorzugt weniger als 85 %, bevorzugter weniger als 80 %, noch bevorzugter weniger als 75 %, noch weiter bevorzugt weniger als 70 % und am stärksten bevorzugt weniger als 60 % beträgt.

8. Quantenzufallszahlengenerator nach einem der vorstehenden Ansprüche, wobei die einzelne Fotodiode eine Quanteneffizienz bei der Wellenlänge oder dem Wellenlängenband des von der Laserquelle empfangenen Lichts aufweist, wobei die Quanteneffizienz mehr als 10 %, bevorzugt mehr als 15 %, bevorzugter mehr als 20 %, noch bevorzugter mehr als 25 %, noch weiter bevorzugt mehr als 30 % und am stärksten bevorzugt mehr als 40 % beträgt.

9. Quantenzufallszahlengenerator nach einem der vorstehenden Ansprüche, wobei die Verarbeitungseinheit dazu konfiguriert ist, die digitale Ausgabe von dem Analog-Digital-Wandler unter Verwendung eines Zufallsextraktionsalgorithmus in Zufallszahlen umzuwandeln, wobei der Zufallsextraktionsalgorithmus bevorzugt auf Hash-Funktionen basiert.

10. Quantenzufallszahlengenerator nach einem der vorstehenden Ansprüche, wobei die Strahlungsquelle und/oder die Fotodiode auf einer photonischen integrierten Schaltung (PIC) bevorzugt auf Silizium-Basis oder noch bevorzugter auf Indiumphosphid-Basis integriert ist/sind.

11. Quantenzufallszahlengenerator nach einem der vorstehenden Ansprüche, wobei der Quantenzufallszahlengenerator auf einer integrierten Schaltung (IC) integriert ist, wobei die IC bevorzugt die PIC umfasst.

12. Quantenzufallszahlengenerator nach einem der vorstehenden Ansprüche, wobei der Quantenzufallszahlengenerator einen Wellenleiter zum Leiten des Lichts von der Strahlungsquelle zu der Fotodiode umfasst, wobei der Wellenleiter bevorzugt ein Silizium-Wellenleiter oder ein Indiumphosphid-Wellenleiter ist.

13. Quantenzufallszahlengenerator nach einem der vorstehenden Ansprüche, wobei der Quantenzufallszahlengenerator derart modifiziert ist, dass die Quanteneffizienz der Fotodiode eins ist.

14. Quantenzufallszahlengenerator nach einem der vorstehenden Ansprüche, wobei die Untergrenze der Entropie durch Folgendes bestimmt wird

> Reflektivität des Strahlteilers,
> Leistung der Strahlungsquelle, und
> Auflösung des Analog-Digital-Wandlers
> oder
> Reflektivität des Strahlteilers,
> Quanteneffizienz der Fotodiode,
> Leistung der Strahlungsquelle, und
> Auflösung des Analog-Digital-Wandlers.

15. Quantenzufallszahlengenerator nach einem der Ansprüche, wobei die Vakuumzustände als Zufallsquelle die Strahlung von der Strahlungsquelle an der einzelnen Fotodiode aufgrund der von eins verschiedenen Quanteneffizienz der Fotodiode und an dem Strahlteiler aufgrund der von eins verschiedenen Reflektivität des Strahlteilers stören.

## Revendications

1. Générateur de nombres aléatoires quantiques comprenant :

   - une source d'entropie comprenant une source de rayonnement, telle qu'une source laser,
   - une photodiode unique configurée pour générer un photocourant sur la base de la lumière reçue de la source de rayonnement, la photodiode ayant une efficacité quantique non unitaire pour permettre l'interférence du rayonnement de la source de rayonnement avec un état de vide pour obtenir l'entropie de l'état de vide, ou
   - une photodiode unique configurée pour générer un photocourant sur la base de la lumière reçue de la source de rayonnement, et un séparateur de faisceau avec une réflectivité non unitaire ou une transmittance non unitaire positionné entre la source de rayonnement et la photodiode unique, dans lequel le générateur de nombres aléatoires quantiques est configuré de telle sorte qu'un état de vide interfère avec le rayonnement de la source de rayonnement au niveau du séparateur de faisceau,
   - un amplificateur de transimpédance pour convertir le photo-courant en tension,
   - un convertisseur analogique-numérique pour convertir la tension analogique en une sortie numérique, et
   - une unité de traitement,

   dans lequel le générateur de nombres aléatoires quantiques est configuré pour établir une limite inférieure sur l'entropie à partir de l'état de vide en obtenant au moins des paramètres à partir du signal qui sort du convertisseur analogique-numérique et en déterminant la limite inférieure sur l'entropie à partir de l'état de vide en appliquant une preuve de sécurité auxdits paramètres, et dans lequel l'unité de traitement est configurée pour convertir la sortie numérique du convertisseur analogique-numérique en nombres aléatoires sur la base de la limite inférieure établie sur l'entropie à partir de l'état de vide.

2. Générateur de nombres aléatoires quantiques selon la revendication 1, dans lequel la limite inférieure de l'entropie est déterminée par, de préférence uniquement déterminée par, l'une quelconque ou la totalité

   - de l'efficacité quantique de la photodiode,
   - de la puissance de la source de rayonnement, et
   - de la résolution du convertisseur analogique-numérique.

**3.** Générateur de nombres aléatoires quantiques selon l'une quelconque des revendications précédentes, dans lequel les états de vide utilisés comme source de caractère aléatoire interfèrent avec le rayonnement provenant de la source de rayonnement au niveau de la photodiode en raison de l'efficacité quantique non unitaire de la photodiode.

**4.** Générateur de nombres aléatoires quantiques selon l'une quelconque des revendications précédentes, dans lequel les seuls états de vide utilisés comme source de caractère aléatoire interfèrent avec le rayonnement provenant de la source de rayonnement au niveau de la photodiode en raison de l'efficacité quantique non unitaire de la photodiode.

**5.** Générateur de nombres aléatoires quantiques selon l'une quelconque des revendications précédentes, dans lequel la source de rayonnement est un laser à diode Fabry-Perot, un laser à rétroaction distribuée, un laser à réflecteur de Bragg distribué, un laser à cavité verticale émettant par la surface, une source micro-onde cohérente ou une source de rayonnement incohérente, telle qu'une lampe LED, une lampe fluorescente, une lampe à incandescence comme par exemple une lampe halogène, une lampe à arc, une lampe à décharge de gaz ou une source micro-onde.

**6.** Générateur de nombres aléatoires quantiques selon l'une quelconque des revendications précédentes, dans lequel la photodiode unique est une diode à l'arséniure d'indium et de gallium, une diode au silicium ou une diode au germanium.

**7.** Générateur de nombres aléatoires quantiques selon l'une quelconque des revendications précédentes, dans lequel la photodiode unique a une efficacité quantique à la longueur d'onde ou à la bande de longueurs d'onde de la lumière reçue de la source laser, où l'efficacité quantique est inférieure à 90 %, de préférence inférieure à 85 %, de manière davantage préférée inférieure à 80 %, encore de manière davantage préférée inférieure à 75 %, encore de manière davantage préférée inférieure à 70 %, et de manière préférée entre toutes inférieure à 60 %.

**8.** Générateur de nombres aléatoires quantiques selon l'une quelconque des revendications précédentes, dans lequel la photodiode unique a une efficacité quantique à la longueur d'onde ou à la bande de longueurs d'onde de la lumière reçue de la source laser, où l'efficacité quantique est supérieure à 10 %, de préférence supérieure à 15 %, de manière davantage préférée supérieure à 20 %, encore de manière davantage préférée supérieure à 25 %, encore de manière davantage préférée supérieure à 30 %, et de manière préférée entre toutes supérieure à 40 %.

**9.** Générateur de nombres aléatoires quantiques selon l'une quelconque des revendications précédentes, dans lequel l'unité de traitement est configurée pour convertir la sortie numérique à partir du convertisseur analogique-numérique en nombres aléatoires à l'aide d'un algorithme d'extraction de caractère aléatoire, de préférence dans lequel l'algorithme d'extraction de caractère aléatoire est basé sur des fonctions de hachage.

**10.** Générateur de nombres aléatoires quantiques selon l'une quelconque des revendications précédentes, dans lequel la source de rayonnement et/ou la photodiode est/sont intégrée(s) sur un circuit intégré photonique (PIC), de préférence, basé sur du silicium, ou encore de manière davantage préférée, basé sur du phosphure d'indium.

**11.** Générateur de nombres aléatoires quantiques selon l'une quelconque des revendications précédentes, dans lequel le générateur de nombres aléatoires quantiques est intégré sur un circuit intégré (CI), de préférence dans lequel le CI comprend le PIC.

**12.** Générateur de nombres aléatoires quantiques selon l'une quelconque des revendications précédentes, dans lequel le générateur de nombres aléatoires quantiques comprend un guide d'ondes pour guider la lumière de la source de rayonnement vers la photodiode, de préférence le guide d'ondes est un guide d'ondes en silicium ou un guide d'ondes en phosphure d'indium.

**13.** Générateur de nombres aléatoires quantiques selon l'une quelconque des revendications précédentes, dans lequel le générateur de nombres aléatoires quantiques est modifié en ce que l'efficacité quantique de la photodiode est unitaire.

**14.** Générateur de nombres aléatoires quantiques selon l'une quelconque des revendications précédentes, dans lequel la limite inférieure de l'entropie est déterminée par

- la réflectivité du séparateur de faisceau,
- la puissance de la source de rayonnement, et
- la résolution du convertisseur analogique-numérique

ou
- la réflectivité du séparateur de faisceau,
- l'efficacité quantique de la photodiode,
- la puissance de la source de rayonnement, et
- la résolution du convertisseur analogique-numérique.

15. Générateur de nombres aléatoires quantiques selon l'une quelconque des revendications, dans lequel les états de vide en tant que source de caractère aléatoire interfèrent avec le rayonnement provenant de la source de rayonnement au niveau de la photodiode unique en raison de l'efficacité quantique non unitaire de la photodiode et au niveau du séparateur de faisceau en raison de la réflectivité non unitaire du séparateur de faisceau.

Fig. 1a

Fig. 3

200

Start

↓

Radiation
source

→

205

Photo Diode

→

210

TI Amplifier

↓

220

Verification of
assumption

←

A/D Converter

↓

225

Determination
of parameters

215

↓

230

Calculate
Min-Entropy

↓

235

Randomness
Extraction

Fig. 2

115    135

110    120    125    130

PD    ADC    Randomness
Extraction

Fig. 1b

Fig. 4a

Fig. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANCESCO RAFFAELLI**. Quantum Random Number Generators in Integrated Photonics. University of Bristol, 2018
- **GEHRING**. Security Analysis. *8 GBit/s real-time quantum random number generator with non-iid samples*
- *Security Analysis*